# Europäisches Patentamt
# European Patent Office
# Office européen des brevets

(11) Veröffentlichungsnummer: **0 212 554**
**B1**

(12) # EUROPÄISCHE PATENTSCHRIFT

(45) Veröffentlichungstag der Patentschrift:
28.03.90

(51) Int. Cl.⁴: **B29C 49/46, B29C 49/64**

(21) Anmeldenummer: **86111156.5**

(22) Anmeldetag: **12.08.86**

(54) **Verfahren zur Verringerung der Permeation von blasgeformten Hohlkörpern aus thermoplastischen Kunststoffen.**

(30) Priorität: **21.08.85 DE 3529870**

(43) Veröffentlichungstag der Anmeldung:
**04.03.87 Patentblatt 87/10**

(45) Bekanntmachung des Hinweises auf die Patenterteilung:
**28.03.90 Patentblatt 90/13**

(84) Benannte Vertragsstaaten:
**DE FR GB IT SE**

(56) Entgegenhaltungen:
**EP-A- 0 039 929**
**EP-A- 0 176 044**
**DE-A- 1 905 094**
**DE-A- 2 924 797**
**DE-A- 3 535 602**
**DE-C- 3 523 137**
**US-A- 2 811 468**
**US-A- 3 862 284**
**US-A- 3 998 180**
**US-A- 4 396 567**
**US-A- 4 439 394**

(73) Patentinhaber: **BASF Aktiengesellschaft,
Carl-Bosch-Strasse 38, D-6700 Ludwigshafen(DE)**

(72) Erfinder: **Wieland, Otmar, Konventstrasse 65,
D-6520 Worms 1(DE)**
Erfinder: **Lohrbaecher, Volker, Kisslichstrasse 1,
D-6940 Weinheim(DE)**

**Beschreibung**

Die Erfindung bezieht sich auf ein Verfahren nach dem Oberbegriff des Anspruchs 1.

Blasgeformte Hohlkörper werden in großem Umfang aus Polyethylen, insbesondere aus hochmolekularem HDPE, hergestellt, da dieser Kunststoff hinsichtlich seiner Widerstandsfähigkeit gegen chemische Einwirkungen, seiner Stoßfestigkeit, seiner Verformbarkeit bei niedrigen Temperaturen und auch hinsichtlich seiner Undurchlässigkeit für Wasserdampf ausgezeichnete Eigenschaften besitzt. Dagegen sind Hohlkörper aus Polyethylen wenig widerstandsfähig gegen den Durchtritt von bestimmten Flüssigkeiten, Gasen oder Dämpfen, beispielsweise Kohlenwasserstoffen, so daß der im Hohlkörper befindliche Stoff, normalerweise eine Flüssigkeit, durch Diffusion von innen in seiner Beschaffenheit oder Menge verändert werden kann.

Um Kunststoffbehälter zur Aufbewahrung einer Vielzahl verschiedener Stoffe verwendbar zu machen ist es aus der DE-C 2 401 948 bekannt, die innere Oberfläche der Behälter einige Zeit der Einwirkung eines fluorhaltigen Behandlungsgases auszusetzen. Dabei wird ein Schlauch oder ein Vorformling zur Anpassung an die Innenfläche einer Blasform expandiert, in der der Schlauchabschnitt eingeschlossen ist, indem man in den Schlauchabschnitt unter Druck eine Mischung von etwa 0,1 bis etwa 10 Vol.% Fluor und aus im übrigen einem inerten Gas einführt.

Es wurde jedoch festgestellt, daß bei mit hoher Geschwindigkeit arbeitenden Blasformsystemen die Sperreigenschaften eines solchermaßen geblasenen Artikels über die Ausdehnung der Wandung bei weitem nicht gleichförmig sind. Das bedeutet, daß verschiedene Bereiche der Wandungen gegenüber Kohlenwasserstoffen weiterhin durchlässig bleiben und zwar mit im weiten Umfang variierenden Durchgangsgeschwindigkeiten. In vielen Fällen erreicht die Durchgangsgeschwindigkeit im wesentlichen jene Werte, wie sie unbehandelte Artikel zeigen. Darüber hinaus ergeben sich verhältnismäßig lange Zykluszeiten, da die Stückzahl der pro Zeiteinheit herstellbaren Behälter von der Wirksamkeit der Kühleinrichtung im Blasformwerkzeug abhängig ist.

Weiterhin ist aus der EP-A 0 176 044 ein Verfahren zur Herstellung von Hohlkörpern aus thermoplastischem Kunststoff durch Blasformen bekannt (Art. 54(3), EPÜ). Dabei wird zunächst ein schlauchförmiger Vorformling gebildet und der Vorformling innerhalb einer Blasform unter Verwendung eines Inertgases unter hohem Druck bis zur völligen Anlage an der Innenkontur der Blasform aufgeweitet. In einem besonderen Verfahrensschritt erfolgt anschließend die Behandlung des Hohlkörpers mit Hilfe eines Reaktionsgases unter wesentlich geringerem Druck. Es werden zwar das Aufweiten des Vorformlings zum Kohlkörper und das Behandeln der Hohlkörperinnenwandung voneinander getrennt, eine Verringerung der Zykluszeit läßt sich damit jedoch nicht erreichen, da der Hohlkörper auch während der Ausbildung einer impermeablen Innenschicht in der Blasform verbleibt.

Außerdem sind für die Entsorgung der korrosiven Reaktionsgase aufwendige Sicherheitseinrichtungen an der Blasform erforderlich, um das Entweichen von Reaktionsgas zu verhindern, wenn beispielsweise der Hohlkörper undicht ist.

Mit der Erfindung soll ein Verfahren zur Verringerung der Permeation von blasgeformten Hohlkörpern aus thermoplastischen Kunststoffen geschaffen werden, welches diese Nachteile vermeidet und insbesondere eine Stückzahlerhöhung beim Blasformen ermöglicht.

Zur Lösung dieser Aufgabe wird die Maßnahme nach dem Kennzeichen des Anspruchs 1 vorgeschlagen.

Gemäß der Erfindung erfolgt die Behandlung der Hohlkörper zur Verringerung der Permeation ihrer Wandungen nicht in der Blasform, sondern in einem separaten Nachkühlwerkzeug. Es wird somit die Beaufschlagung der Innenoberfläche der Hohlkörper mit reaktivem Behandlungsgas an bereits ausgeformten Hohlkörpern durchgeführt und zwar abgetrennt von dem komplizierten Blasformprozeß auf der Blasformmaschine. Eine Gefährdung der teuren Einrichtungen der Blasformmaschine durch Korrosion besteht nicht. Desweiteren sind den Blasformprozeß im allgemeinen belastende Sicherheitsvorkehrungen entbehrlich.

Die Hohlkörper aus vorzugsweise hochmolekularem HDPE werden unmittelbar nach ihrer Ausformung, jedoch in formstabilem Zustand, aus der Blasform entnommen und in ein Nachkühlwerkzeug eingebracht. Für die sich anschließende Behandlung mit reaktivem Gas kann die in den Hohlkörperwandungen noch vorhandene Wärme ausgenutzt werden. Dabei hat sich eine Temperatur der Innenoberfläche der Hohlkörper von wenigstens 110°C insgesamt als zweckmäßig erwiesen. Die Einwirkungszeit des Behandlungsgases beträgt dann nur wenige Sekunden, beispielsweise 1 bis 20 Sekunden. Das Behandlungsgas wird vorzugsweise unter einem Druck von 5 bis 12 bar in die Hohlkörper eingeleitet. Anschließend werden die Hohlkörper ausgespült und gekühlt. Dies kann mit Hilfe eines trockenen Gases, beispielsweise mit Hilfe von Stickstoff geschehen, wobei der Druck des Spülmediums in Intervallen angehoben und wieder gesenkt wird.

Nach einem weiteren Merkmal der Erfindung besteht das reaktive Behandlungsgas aus Fluor oder Chlor oder Schwefeltrioxid und Inertgas. Der Anteil der Reaktivkomponente des Behandlungsgases kann in weiten Grenzen variieren und beträgt im allgemeinen etwa 0,1 bis 20 Vol.%.

Ein nach dem Verfahren hergestellter Hohlkörper zeigt eine gleichförmige Sperrwirkung über die ganze Ausdehnung seiner Innenoberfläche und zwar in einem Ausmaß, daß ausreichend ist, um den Hohlkörper für die Aufnahme von Kohlenwasserstoffen geeignet zu machen. Durch die Behandlung der Hohlkörper in einem separaten Nachkühlwerkzeug ergibt sich außerdem eine wesentliche Reduzierung der Zykluszeit und es werden Hohlkörper mit verbesserter Formtreue erhalten.

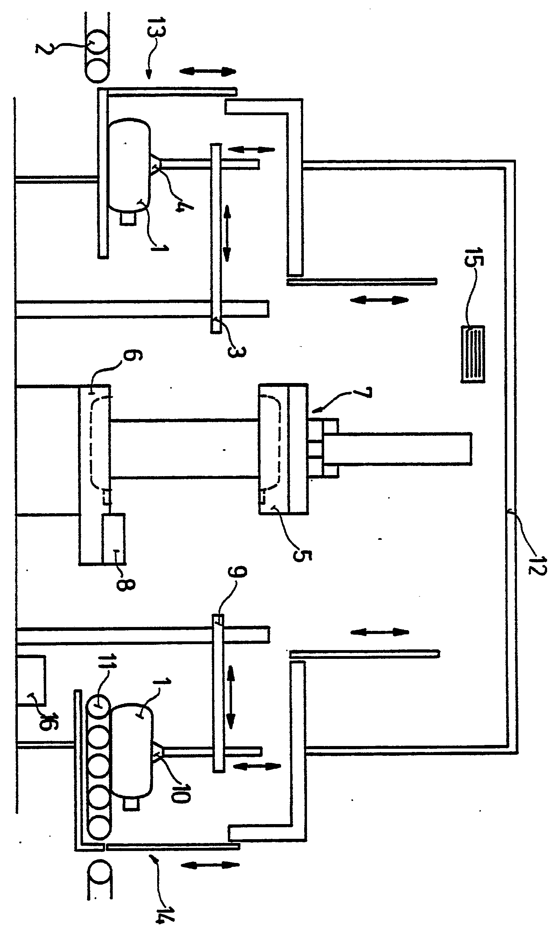

Die Erfindung wird nachfolgend unter Hinweis auf die Zeichnung näher erläutert.

In der Zeichnung sind die Blasformmaschine und die Blasform nicht dargestellt. Ein aus der Blasform entnommener Hohlkörper (1) wird mittels eines Förderbandes (2) in den Arbeitsbereich einer Greifeinrichtung (3), welche einen oder mehrere Saugnäpfe (4) aufweist, transportiert und von dieser in ein Nachkühlwerkzeug eingelegt. Das Nachkühlwerkzeug besteht im wesentlichen aus einer oberen (5) und einer unteren (6) Werkzeughälfte und ist in einer Presse (7) angebracht. Die Innenkontur des Nachkühlwerkzeuges entspricht praktisch der der Blasform. Bei geschlossenem Nachkühlwerkzeug erfolgt die Beaufschlagung der Innenoberfläche des Hohlkörpers mit reaktivem Behandlungsgas. Hierfür ist eine Einblaseinrichtung (8) vorgesehen. Der Hohlkörper wird etwa 1 bis 20 Sekunden bei einem Gasdruck von etwa 5 bis 12 bar der Einwirkung des Behandlungsgases ausgesetzt, wobei die Temperatur seiner Innenoberfläche wenigstens 110°C beträgt. Im Anschluß daran wird das reaktive Gas durch trockenen Stickstoff verdrängt, indem der Hohlkörper über wenigstens eine weitere Öffnung gespült wird. Hierzu wird der Gasdruck im Hohlkörper entweder intermittierend oder auf Dauer bis auf einen für die Spülung erforderlichen Druck von 5 bis 7 bar reduziert. Nach Abschluß des Spül- und Nachkühlvorgangs kann der Hohlkörper mit Hilfe einer zweiten, ebenfalls mit Saugnäpfen (10) versehenen Greifeinrichtung (9) dem Nachkühlwerkzeug entnommen und auf ein zweites Förderband (11) übergeben werden, wobei mehr oder weniger gleichzeitig die erste Greifeinrichtung einen weiteren Hohlkörper in das Nachkühlwerkzeug einlegt.

Aus Sicherheitsgründen können die Greifeinrichtungen (3, 9), die Presse (7) mit dem Nachkühlwerkzeug (5, 6) sowie das zweite Förderband (11) in einer gasdicht verschließbaren Kammer (12) angeordnet sein. Die Öffnungen (13) und (14) der Kammer für die Zufuhr und den Abtransport der Hohlkörper (1) sind in diesem Fall zweckmäßigerweise in Form von Schleusen ausgebildet. Weiterhin besitzt die Kammer wenigstens eine Zuluftöffnung (15) sowie eine Absaugöffnung (16), die gegebenenfalls an eine Gaswaschanlage angeschlossen ist.

**Patentansprüche**

1. Verfahren zur Verringerung der Permeation von blasgeformten Hohlkörpern aus thermoplastischen Kunststoffen, insbesondere aus hochmolekularem HDPE, bei dem ein schlauchförmiger Vorformling innerhalb einer Blasform mittels eines Blasgases zur Anlage an die Innenkontur der Blasform aufgeweitet und der Hohlkörper der Einwirkung eines reaktiven Behandlungsgases ausgesetzt wird, dadurch gekennzeichnet, daß der Hohlkörper bei einer Temperatur seiner Innenoberfläche von wenigstens 110°C in einem Nachkühlwerkzeug mit dem reaktiven Behandlungsgas beaufschlagt wird.

2. Verfahren nach Anspruch 1, dadurch gekennzeichnet, daß das reaktive Behandlungsgas aus Fluor oder Chlor oder Schwefeltrioxid und Inertgas besteht.

**Claims**

1. A method for reducing the permeability of blow moldings of thermoplastics, in particular of high molecular weight HDPE, in which a tubular parison is expanded within a blow mold by means of a blow gas and caused to rest against the internal contour of the blow mold, and the blow molding is exposed to the action of a reactive treatment gas, wherein the blow molding is brought into contact with the reactive treatment gas in a cooling mold at a temperature of not less than 110°C at the internal surface of the said molding.

2. A method as claimed in claim 1, wherein the reactive treatment gas consists of fluorine or chlorine or sulfur trioxide and an inert gas.

**Revendications**

1. Procédé pour réduire la perméation de corps creux, en matières plastiques, formés par soufflage, en particulier en HDPE à poids moléculaire élevé, dans lequel une ébauche en forme de gaine est expansée à l'intérieur d'un moule de soufflage, au moyen d'un gaz de soufflage pour s'appliquer contre le contour intérieur du moule de soufflage et le corps creux est soumis à l'action d'un gaz de traitement réactif, caractérisé par le fait que le corps creux est soumis à l'action du gaz de traitement réactif dans un outil de post-refroidissement, à une température de sa surface intérieure d'au moins 110°C.

2. Procédé selon la revendication 1, caractérisé par le fait que le gaz de traitement réactif est constitué de fluor ou chlore ou anhydride sulfurique et de gaz inerte.

EP 0 212 554 B1